Europäisches Patentamt

(19) European Patent Office

Office européen des brevets

(11) Numéro de publication : **0 109 324**
**B1**

(12) **FASCICULE DE BREVET EUROPÉEN**

(45) Date de publication du fascicule du brevet :
16.04.86

(21) Numéro de dépôt : 83402086.9

(22) Date de dépôt : 26.10.83

(51) Int. Cl.⁴ : **A 01 F 11/06**

(54) **Machine pour la récolte du mais.**

(30) Priorité : 29.10.82 FR 8218187

(43) Date de publication de la demande :
23.05.84 Bulletin 84/21

(45) Mention de la délivrance du brevet :
16.04.86 Bulletin 86/16

(84) Etats contractants désignés :
**AT BE CH DE GB IT LI LU NL SE**

(56) Documents cités :
**DE-B- 301 234**
**FR-A- 2 066 432**
**FR-A- 2 409 689**
**US-A- 1 814 723**
**US-A- 1 943 284**
**US-A- 3 450 138**

(73) Titulaire : **LACAILLE S.A., Société Anonyme dite:**
**Conan**
**F-41290 Oucques (FR)**

(72) Inventeur : **Lacaille, Christian**
**Le Hameau du Val de Cisse**
**F-41330 Fosse (FR)**

(74) Mandataire : **Bonnetat, Christian et al**
**Cabinet PROPI Conseils 23 rue de Léningrad**
**F-75008 Paris (FR)**

Jouve, 18, rue St-Denis, 75001 Paris, France

**Description**

La présente invention concerne une machine pour la récolte du maïs, notamment du maïs doux et des maïs de semence.

On connaît déjà une machine pour la récolte du maïs comportant un châssis mobile, automoteur par exemple, sur lequel sont montés, d'une part à l'avant, une tête de cueille susceptible de couper les tiges des maïs, de couper les épis des tiges et d'amener les tiges coupées, les feuilles et les épis à un premier transporteur-élévateur, à la partie supérieure duquel sont prévus un broyeur rotatif susceptible de broyer et d'éjecter des déchets (feuilles, tiges) et un dispositif de guidage, généralement à rouleaux, des tiges vers ledit broyeur, et, d'autre part à l'arrière, un dispositif, par exemple un transporteur, pour l'évacuation des épis séparés des déchets, des moyens de tri pour parfaire l'élimination des déchets étant disposés entre ledit premier transporteur-élévateur et ledit dispositif d'évacuation.

Dans cette machine connue, le broyeur rotatif est monté latéralement de façon que son axe soit horizontal et lesdits moyens de tri comportent, d'une part, un second transporteur-élévateur dont l'extrémité basse se trouve en dessous de l'extrémité haute du premier transporteur-élévateur et dont l'extrémité haute se trouve au-dessus dudit dispositif d'évacuation, et, d'autre part, deux ventilateurs, chacun associé à l'une des extrémités dudit second transporteur-élévateur. Ainsi, lorsque les épis tombent du premier transporteur-élévateur sur le second, accompagnés de déchets n'étant pas passés directement dans le broyeur, le ventilateur correspondant refoule ces déchets, relativement légers, vers ledit broyeur, tandis que les épis de maïs, plus lourds, atteignent sans encombre ledit second transporteur-élévateur. De même, lorsque les épis, encore accompagnés de quelques déchets, tombent du second transporteur-élévateur sur le dispositif d'évacuation, l'autre ventilateur permet un tri entre les épis et ces quelques déchets restant, en utilisant la différence de poids de ceux-ci.

Une telle machine est complexe et coûteuse. De plus elle présente l'inconvénient de faire subir aux épis deux chutes consécutives (l'une entre le premier et le second transporteur-élévateur, l'autre entre ce dernier et le dispositif d'évacuation), de sorte que, si ces chutes n'ont guère d'influence sur le maïs dur, généralement destiné à l'alimentation animale ou à la fabrication industrielle d'aliments, il n'en est pas de même pour le maïs doux, destiné directement à l'alimentation humaine. Le maïs doux est particulièrement tendre et les deux chutes subies dans la machine connue abiment les grains de maïs qui deviennent inutilisables.

La présente invention a pour objet de remédier à ces inconvénients. Elle concerne une machine, simple et relativement peu coûteuse, pour la récolte de maïs, évitant de détériorer les grains de maïs récoltés, même lorsqu'elle est utilisée pour la récolte de maïs doux.

A cette fin, selon l'invention, la machine pour la récolte du maïs, notamment du maïs doux, comportant un châssis mobile sur lequel sont montés, d'une part à l'avant, une tête de cueille susceptible de faucher les tiges de maïs, de couper les épis des tiges et d'amener les épis, les tiges coupées, les feuilles et autres déchets à un transporteur-élévateur, à la partie supérieure duquel sont prévus un broyeur rotatif susceptible de broyer et d'éjecter les déchets et un dispositif pour le guidage des tiges vers ledit broyeur, et, d'autre part à l'arrière, un dispositif pour l'évacuation des épis séparés des déchets, des moyens de tri pour parfaire l'élimination des déchets étant disposés entre ledit transporteur-élévateur et ledit dispositif d'évacuation des épis, est remarquable en ce que lesdits moyens de tri comportent une table de transport au moins approximativement horizontale et en ce que ledit broyeur rotatif est agencé au-dessus de ladite table avec son axe au moins approximativement vertical, de façon à agir comme aspirateur pour les déchets cheminant sur ladite table.

Ainsi, dans la machine selon l'invention, ledit broyeur exerce non seulement son action propre, mais il agit comme aspirateur et il permet la suppression des deux ventilateurs et des deux chutes prévues dans la machine antérieure. Il évite donc la détérioration des grains de maïs, tout en simplifiant la structure de ladite machine.

Dans un mode avantageux de réalisation, ladite table est ajourée et on prévoit éventuellement un ventilateur pour renforcer l'action dudit broyeur. La table peut être constituée de barreaux longitudinaux espacés et le ventilateur peut être du type soufflant et disposé sous ladite table.

Le broyeur rotatif peut également comporter plusieurs rotors de broyage et d'aspiration.

Afin de permettre le réglage en hauteur de la tête de cueille, on peut monter le broyeur sur un bâti articulé sur le châssis fixe de la machine, ledit bâti du broyeur étant articulé au bâti du transporteur-élévateur et de la tête de cueille. La table de transport peut alors être rigidement liée au châssis de la machine.

Les figures du dessin annexé feront bien comprendre comment l'invention peut être réalisée.

La figure 1 est une vue de côté schématique d'une machine selon l'invention.

La figure 2 est une vue de côté, également schématique, mais à plus grande échelle, des moyens de tri de la machine selon l'invention.

La figure 3 est une vue selon la ligne III-III de la figure 2, montrant la table de transport.

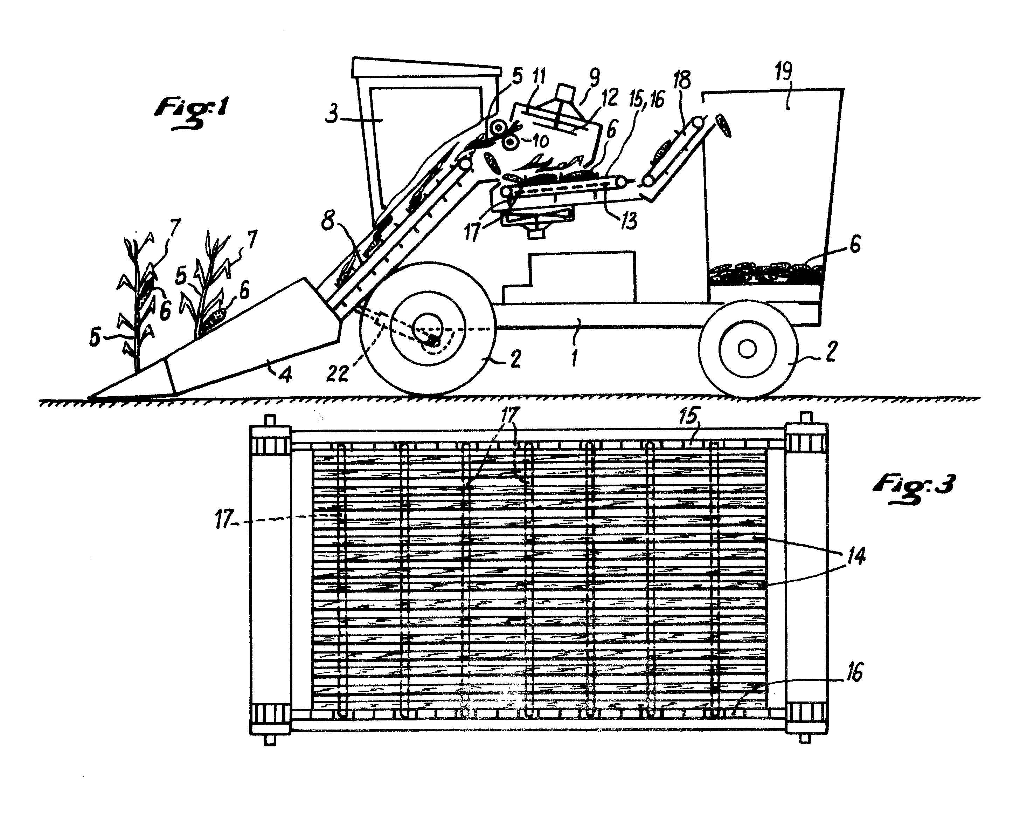

La machine selon l'invention, destinée à la récolte du maïs, notamment du maïs doux, et montrée schématiquement sur la figure 1, comporte un châssis automoteur 1, pourvu de roues 2 et d'une cabine de pilotage 3.

A l'avant du châssis 1 est montée une tête de cueille 4, qui peut être de tout type connu et qui est susceptible de faucher les tiges de maïs 5, puis de couper les épis 6 des tiges 5 et d'amener les épis 6, les tiges 5 coupées et les feuilles et autres déchets 7 à l'extrémité inférieure d'un transporteur-élévateur sans fin 8, également monté à la partie avant du châssis 1.

A la partie supérieure du transporteur-élévateur 8 est disposé un broyeur rotatif 9 et un dispositif de guidage 10 des tiges coupées 5 vers ledit broyeur. De façon connue, un tel dispositif de guidage 10 est constitué de cylindres coopérants.

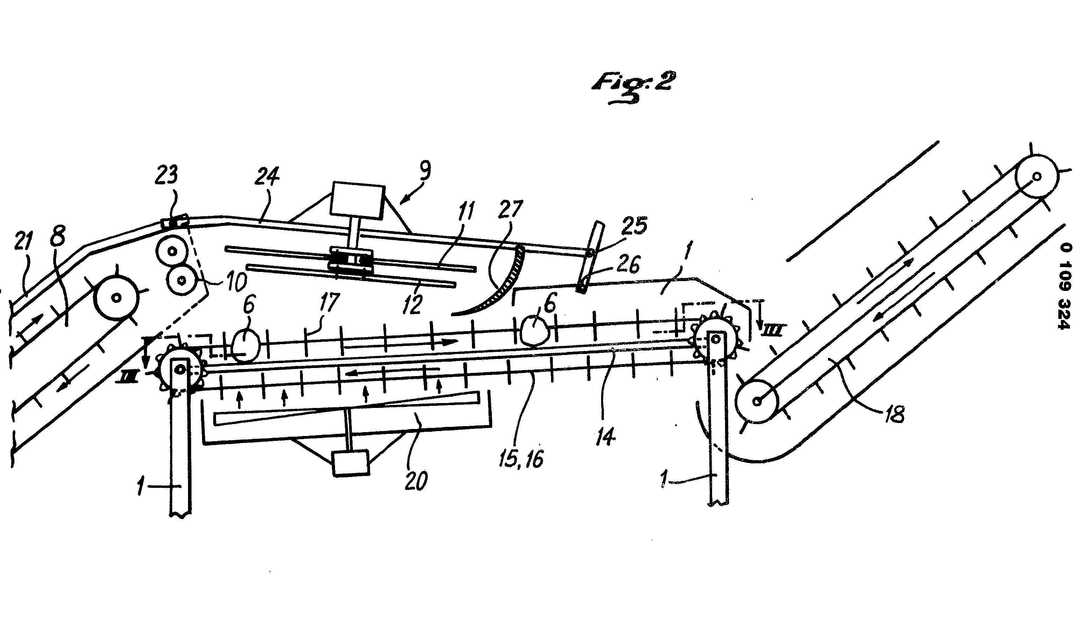

Comme le montrent les figures 1 et 2, le broyeur rotatif 9 comporte deux ensembles de lames 11 et 12 et il est disposé au-dessus d'une table ajourée 13. Cette table ajourée est par exemple constituée de barreaux parallèles 14 (voir la figure 3) auxquels sont associées deux chaînes latérales 15, 16. Des palettes transversales 17 sont liées aux chaînes latérales sans fin 15, 16 de façon que les épis 6 et les déchets passant du transporteur-élévateur 8 à la table de transport 13 à 17 puissent être déplacés vers le dispositif d'évacuation 18, par exemple un transporteur sans fin.

Au cours de ce déplacement, le broyeur 9 exerce, par l'intermédiaire de ses rotors 11 et 12, une action d'aspiration telle que les déchets sont aspirés et broyés, seuls les épis 6 continuant leur chemin vers le transporteur 18 ; le broyeur 9 évacue latéralement les déchets broyés, de façon non représentée.

Ainsi, les épis 6 sont transmis au transporteur 18, qui les charge dans une trémie 19 portée par le châssis 1.

Eventuellement, un ventilateur soufflant 20, disposé sous la table de transport 13 à 17 apporte une aide au broyeur 9 pour diriger les différents déchets vers celui-ci.

Comme on peut le voir sur la figure 2, la table 13 à 17 et le ventilateur 20 peuvent être portés directement par le châssis 1 de la machine. En revanche, le bâti 21 du transporteur-élévateur 8 peut-être solidaire de la tête de cueille 4, qui peut être levée ou abaissée à l'aide de vérins 22 prenant appui sur ledit châssis 1. Dans ce cas, ledit bâti 21 du transporteur-élévateur est articulé en 23 au bâti 24 du broyeur 9, ledit bâti 24 étant lui-même articulé, en 25 et 26 au châssis 1.

Un déflecteur 27 peut être prévu pour augmenter l'action d'aspiration du broyeur 9. On remarquera que, de plus, le déflecteur 27 disposé juste au-dessus des palettes 17 du côté aval du broyeur 9 (par rapport au sens de circulation desdites palettes 17) sert de butée d'arrêt aux tiges 5 et aux feuilles 7 parvenant jusqu'à lui, puisque celles-ci reposent sur les palettes 17 à cause de leur longueur et de leur légèreté, alors que les épis 6 se trouvent entre les palettes 17, par suite de leur poids. Ainsi, ces tiges 5 et ces feuilles 7 restantes, arrêtées par le déflecteur 27, mais poussées par les palettes 17, sont dirigées par ledit déflecteur vers le broyeur 9 où elles sont broyées, tandis que les épis 6 passent sous ledit déflecteur.

On doit remarquer que dans la machine selon l'invention, les épis de maïs 6 subissent peu de manipulations, de sorte que cette machine est particulièrement appropriée à la moisson de maïs fragile, tel que le maïs doux ou le maïs de semence.

**Revendications**

1. Machine pour la récolte du maïs, notamment du maïs doux, comportant un châssis (1) mobile sur lequel sont montés, d'une part à l'avant, une tête de cueille (4) susceptible de faucher les tiges de maïs (5), de couper les épis (6) des tiges (5) et d'amener les épis, les tiges coupées, les feuilles et autres déchets à un transporteur-élévateur (8), à la partie supérieure duquel sont prévus un broyeur rotatif (9) susceptible de broyer et d'éjecter les déchets et un dispositif (10) pour le guidage des tiges vers ledit broyeur, et, d'autre part à l'arrière, un dispositif (18) pour l'évacuation des épis séparés des déchets, des moyens de tri pour parfaire l'élimination des déchets étant disposés entre ledit transporteur-élévateur (8) et ledit dispositif d'évacuation des épis (18), caractérisée en ce que lesdits moyens de tri comportent une table de transport (13) au moins approximativement horizontale et en ce que ledit broyeur (9) est du type à lame ou roue rotative susceptible d'engendrer un effet d'aspiration et est agencé au-dessus de ladite table (13) avec son axe au moins approximativement vertical, de façon à agir comme aspirateur pour les déchets cheminant sur ladite table.

2. Machine selon la revendication 1, caractérisée en ce que ladite table (13) est ajourée.

3. Machine selon la revendication 2, caractérisée en ce que l'on prévoit du côté de ladite table (3) opposé au broyeur (9), un ventilateur (20) pour renforcer l'action d'aspiration dudit broyeur (9).

4. Machine selon la revendication 2, caractérisée en ce que la table de transport (13) est composée de barreaux longitudinaux espacés, associés à des moyens de transport latéraux (15, 16) reliés par des palettes transversales (17).

5. Machine selon l'une quelconque des revendications 1 à 4, caractérisée en ce que ledit broyeur (9) comporte plusieurs rotors.

6. Machine selon l'une quelconque des revendications 1 à 5, caractérisée en ce qu'un déflecteur (27) est associé au broyeur (9).

7. Machine selon l'une quelconque des revendications 1 à 6, dans laquelle la tête de cueille (4) peut être levée ou abaissée au moyen de vérins (22), caractérisée en ce que le broyeur (9) est monté sur un bâti (24) articulé sur le châssis fixe (1) de la machine, ledit bâti (24) du broyeur (9) étant articulé au bâti (21) du transporteur-élévateur (8), solidaire de la tête de cueille (4).

**Claims**

1. Machine for harvesting corn, particularly sweetcorn, comprising a mobile chassis (1) on which are mounted, on the one hand at the front, a picker head (4) capable of mowing the corn stalks (5), of cutting the ears (6) from the stalks (5) and of conducting the ears, the cut stalks, the leaves and other waste products to a conveyor-elevator (8), in the upper part of which are provided a rotating grinding means (9) capable of grinding and ejecting the waste and a device (10) for guiding the stalks towards said grinding means, and, on the other hand at the rear, a device (18) for evacuating the ears separated from the waste, sorting means for completing elimination of the waste being disposed between said conveyor-elevator (8) and said ear evacuating device (18), characterized in that said sorting means comprise an at least approximately horizontal conveyor table (13) and in that said grinding means (9) is of the type with rotating wheel or blade capable of generating an effect of suction and is arranged above said table (13) with its axis at least approximately vertical, so as to act as aspirator for the waste moving over said table.

2. Machine according to Claim 1, characterized in that said table (13) is perforated.

3. Machine according to Claim 2, characterized in that there is provided on the side of said table (3) opposite the grinding means (9) a ventilator (20) for reinforcing the action of suction of said grinding means (9).

4. Machine according to Claim 2, characterized in that the conveyor table (13) is composed of spaced apart longitudinal bars, associated with lateral conveyor means (15, 16) connected by transverse pallets (17).

5. Machine according to any one of Claims 1 to 4, characterized in that said grinding means (9) comprises a plurality of rotors.

6. Machine according to any one of Claims 1 to 5, characterized in that a deflector (27) is associated with the grinding means (9)..

7. Machine according to any one of Claims 1 to 6, in which the picking head (4) may be raised or lowered by means of jacks (22), characterized in that the grinding means (9) is mounted on a frame (24) articulated on the fixed chassis (1) of the machine, said frame (24) of the grinding means (9) being articulated on the frame (21) of the conveyor-elevator (8), fast with the picking head (4).

**Patentansprüche**

1. Maschine zum Ernten von Mais, insbesondere von Weichmais, bestehend aus einem beweglichen Fahrgestell (1), an dessen vorderen Ende einerseits ein Pflückerkopf (4) zum Mähen der Maisstengel (5), Abschneiden der Kolben (6) von den Stengeln und zum Zuführen der Kolben, der abgeschnittenen Stengel, der Blätter und anderen Abfällen zum Hebeförderer (8), an dessen oberen Teil eine Drehschlagmühle 9 zum Zerkleinern und Auswerfen der Abfälle und eine Vorrichtung (10) zum Führen der Stengel zur Mühle vorgesehen sind, und an dessen hinterem Teil andererseits eine Vorrichtung (18) zum Abführen der von den Abfällen getrennten Kolben sowie eine zwischen dem Förderer (8) und der Vorrichtung zum Abführen der Kolben (18) liegende Sortiereinrichtung zum Ausscheiden der Abfälle eingesetzt sind, dadurch gekennzeichnet, daß die Sortiereinrichtung einen zumindest annähernd horizontal verlaufenden Fördertisch (13) aufweist und daß die Mühle (9) oberhalb des Tisches (13) mit ihrer zumindest annähernd senkrecht stehenden Welle derart angetrieben wird, daß sie gegenüber den auf dem Tisch fortbewegten Abfällen wie ein Absauggerät wirksam wird.

2. Maschine nach Anspruch 1, dadurch gekennzeichnet, daß der Tisch (13) durchbrochen ist.

3. Maschine nach Anspruch 3, dadurch gekennzeichnet, daß auf der der Mühle (9) gegenüberliegenden Seite des Tisches (3) ein Gebläse (20) vorgesehen ist, um die Saugwirkung der Mühle (9) zu unterstützen.

4. Maschine nach Anspruch 2, dadurch gekennzeichnet, daß der Fördertisch (13) aus mit Zwischenräumen angeordneten Längsstäben besteht, die an mit den transversalen Paletten (17) verbundenen seitlichen Transportgliedern (15, 16) liegen.

5. Maschine nach einem der Ansprüche 1 bis 4, dadurch gekennzeichnet, daß die Mühle (9) mehrere Rotoren besitzt.

6. Maschine nach einem der Ansprüche 1 bis 5, dadurch gekennzeichnet, daß der Mühle (9) ein Ablenker (27) zugeordnet ist.

7. Maschine nach einem der Ansprüche 1 bis 6, in der der Pflückerkopf (4) durch Hubzylinder angehoben oder abgesenkt werden kann, dadurch gekennzeichnet, daß die Mühle am auf dem festen Fahrgestell (1) der Maschine angelenkten Rahmen (24) eingesetzt ist, der an dem kraftschlüssig mit dem Förderkopf (4) verbundenen Rahmen (21) des Förderers (8) angelenkt ist.

*Fig:1*

*Fig:3*

0 109 324

Fig. 2

0 109 324